(19) Europäisches Patentamt
European Patent Office
Office européen des brevets

(11) **EP 3 511 358 B1**

(12) **EUROPEAN PATENT SPECIFICATION**

(45) Date of publication and mention
of the grant of the patent:
**27.01.2021 Bulletin 2021/04**

(21) Application number: **17848102.4**

(22) Date of filing: **04.09.2017**

(51) Int Cl.:
*C08G 63/183* [(2006.01)]     *C08G 63/58* [(2006.01)]
*C08G 63/52* [(2006.01)]     *C08G 63/85* [(2006.01)]
*C08G 63/181* [(2006.01)]     *C08G 63/78* [(2006.01)]

(86) International application number:
**PCT/CN2017/100368**

(87) International publication number:
**WO 2018/045929 (15.03.2018 Gazette 2018/11)**

(54) **POLYESTER TEREPHTHALATE-CO-SEBATE RESIN AND PREPARATION METHOD THEREFOR**

POLYESTER-TEREPHTHALAT-CO-SEBATHARZ UND HERSTELLUNGSVERFAHREN DAFÜR

RÉSINE DE POLYESTER TÉRÉPHTALATE-CO-SÉBATE ET PROCÉDÉ DE PRÉPARATION ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.09.2016 CN 201610813868**

(43) Date of publication of application:
**17.07.2019 Bulletin 2019/29**

(73) Proprietors:
• **Zhuhai Wango Chemical Co., Ltd.
Zhuhai, Guangdong 519050 (CN)**
• **Kingfa Sci. & Tech. Co., Ltd.
Guangzhou, Guangdong 510663 (CN)**
• **Shanghai Kingfa Sci.&Tech.Co., Ltd.
Shanghai 201714 (CN)**

(72) Inventors:
• **WANG, Weiwei
Guangzhou
Guangdong 510663 (CN)**
• **YUAN, Zhimin
Guangzhou
Guangdong 510663 (CN)**
• **CAI, Tongmin
Guangzhou
Guangdong 510663 (CN)**
• **HUANG, Xianbo
Guangzhou
Guangdong 510663 (CN)**
• **ZENG, Xiangbin
Guangzhou
Guangdong 510663 (CN)**
• **YUAN, Renxu
Guangzhou
Guangdong 510663 (CN)**
• **GUO, Zhilong
Guangzhou
Guangdong 510663 (CN)**
• **TANG, Meijun
Guangzhou
Guangdong 510663 (CN)**

(74) Representative: **Petraz, Gilberto Luigi et al
GLP S.r.l.
Viale Europa Unita, 171
33100 Udine (IT)**

(56) References cited:
**EP-A1- 2 881 415      CN-A- 1 807 485
CN-A- 101 142 256      CN-A- 105 524 261
CN-A- 106 397 748      US-A1- 2011 187 029**

**Description**

**TECHNICAL FIELD**

The present invention belongs to the field of macromolecular synthesis, and specifically, relates to a poly(terephthalate-co-sebacate) resin and a preparation method thereof.

**BACKGROUND**

Poly(terephthalate-co-sebacate) resin is a copolymer of butylene sebacate and butylene terephthalate. The poly(terephthalate-co-sebacate) resin contains flexible aliphatic chains and rigid aromatic chains, thus having high tenacity and high-temperature resistance. Due to the presence of ester bonds, it is prompted to also have biodegradability. It is one of the degradable materials that are very active and have the best market application in current research of biodegradable plastics.

However, the poly(terephthalate-co-sebacate) resin also has following drawbacks: when the poly(terephthalate-co-sebacate) resin is made into a film material, the application of the film material will be affected since the film material has a relatively poor moisture-penetrability. At present, the moisture-penetrability of the film material is usually adjusted with a thickness of the film, such as a PE film. However, such adjustment has a certain drawback that material waste will be easily caused if it is too thick and mechanical properties of the material may be sacrificed if it is too thin. The present invention has discovered by research that, when the poly(terephthalate-co-sebacate) resin has a structure of $S_{\delta\text{ hydrogen on conjugated carbon chain}}/S_{\delta\text{ hydrogen on saturated carbon chain 1.2-2.4}}$ within a certain range, the poly(terephthalate-co-sebacate) resin exhibits a relatively good moisture-penetrability due to the effective control of a sequence length and a sequence randomness of a repeat unit in the molecular chain.

Document EP-A-2.881.415 discloses a method for manufacturing biodegradable copolymer by split-injecting aromatic dicarboxylic acid compound.

**SUMMARY OF THE INVENTION**

A primary object of the present invention is to provide a poly(terephthalate-co-sebacate) resin. The poly(terephthalate-co-sebacate) resin has $S_{\delta\text{ hydrogen on conjugated carbon chain}}/S_{\delta\text{ hydrogen on saturated carbon chain 1.2-2.4}}$ within a certain range, and has a significantly improved moisture-penetrability.

Another object of the present invention is to provide a preparation method of the poly(terephthalate-co-sebacate) resin.

The present invention is accomplished by the following technical solution:

a poly(terephthalate-co-sebacate) resin, characterized in that, a structure of the poly(terephthalate-co-sebacate) resin satisfies a relation as follows:

$$S_{\delta\text{ hydrogen on conjugated carbon chain}}/S_{\delta\text{ hydrogen on saturated carbon chain 1.2-2.4}} = 0.1 \text{ to } 0.35;$$

wherein said $S_{\delta\text{ hydrogen on conjugated carbon chain}}$ is a total area of a peak integration of hydrogen on a conjugated carbon chain in a $^1$H NMR spectra, and said $S_{\delta\text{ hydrogen on saturated carbon chain 1.2-2.4}}$ is a total area of a peak integration of hydrogen on a saturated carbon chain and with a chemical shift between 1.2-2.4 ppm in the $^1$H NMR spectra.

A ratio of $S_{\delta\text{ hydrogen on conjugated carbon chain}}/S_{\delta\text{ hydrogen on saturated carbon chain 1.2-2.4}}$ refers to a relation of the amount of substance of hydrogen on a conjugated carbon chain and hydrogen on a saturated carbon chain and with a chemical shift between 1.2-2.4 ppm in a molecular structure, which reflects a sequence length and a sequence randomness of a repeat unit in the molecular chain of the poly(terephthalate-co-sebacate). There are many factors affecting the ratio of $S_{\delta\text{ hydrogen on conjugated carbon chain}}/S_{\delta\text{ hydrogen on saturated carbon chain 1.2-2.4}}$. For example, differences in structure or proportion of raw material monomers, a degree of monomer self-polymerization, changes of a molecular weight and a sequence structure of the molecular chain, molecular chain segment being uniform or not, a degree of entanglement or branching of the molecular chain, the sequence length and the sequence randomness of the repeat unit in the macromolecular chain, molecular orientation arrangement and a crystal structure and preparation process (e.g. differences in catalysts), etc. will all affect the poly(terephthalate-co-sebacate) eventually prepared to have a large difference in molecular chain structure, and thereby lead to a significant difference in the ratio of $S_{\delta\text{ hydrogen on conjugated carbon chain}}/S_{\delta\text{ hydrogen on saturated carbon chain 1.2-2.4}}$.

The present invention has discovered by research that, when the poly(terephthalate-co-sebacate) resin has $S_{\delta\text{ hydrogen on conjugated carbon chain}}/S_{\delta\text{ hydrogen on saturated carbon chain 1.2-2.4}} = 0.1 \text{ to } 0.35,$

a ratio of the amount of substance of hydrogen on a conjugated carbon chain and hydrogen on a saturated carbon chain and with a chemical shift between 1.2-2.4 ppm in a molecular structure is suitable. Since a sequence length and a sequence randomness of the repeat unit in the macromolecular chain are effectively controlled, when the poly(terephthalate-co-sebacate) resin is made into a thin film with a thickness of 25±1 μm, a water vapor transmission thereof is 100-1500 g/m$^2$/d, thereby making the film material show a relatively good moisture-penetrability. When $S_{\delta\ hydrogen\ on\ conjugated\ carbon\ chain}/S_{\delta\ hydrogen\ on\ saturated\ carbon\ chain\ 1.2\text{-}2.4}$ is lower than 0.1, the hydrogen on saturated carbon chain and with the chemical shift between 1.2-2.4 ppm has a relatively high amount of substance, and an excessive water vapor transmission, which is unfavorable to the development of a packaged product having undue moistureproof requirements, and is also unfavorable to the development of a product, such as an agricultural mulching film having undue water retention performance requirements. When $S_{\delta\ hydrogen\ on\ conjugated\ carbon\ chain}/S_{\delta\ hydrogen\ on\ saturated\ carbon\ chain\ 1.2\text{-}2.4}$ is higher than 0.35, the hydrogen on conjugated carbon chain in the molecular structure has a relatively high amount of substance, and a too low water vapor transmission, which is unfavorable to the development of a film material for food preservation.

Preferably, the structure of the poly(terephthalate-co-sebacate) resin satisfies a relation:

$$S_{\delta\ hydrogen\ on\ conjugated\ carbon\ chain}/S_{\delta\ hydrogen\ on\ saturated\ carbon\ chain\ 1.2\text{-}2.4} = 0.15\ to\ 0.3.$$

More preferably, the structure of the poly(terephthalate-co-sebacate) resin satisfies a relation:

$$S_{\delta\ hydrogen\ on\ conjugated\ carbon\ chain}/S_{\delta\ hydrogen\ on\ saturated\ carbon\ chain\ 1.2\text{-}2.4} = 0.17\ to\ 0.28.$$

Most preferably, the structure of the poly(terephthalate-co-sebacate) resin satisfies a relation:

$$S_{\delta\ hydrogen\ on\ conjugated\ carbon\ chain}/S_{\delta\ hydrogen\ on\ saturated\ carbon\ chain\ 1.2\text{-}2.4} = 0.18\ to\ 0.22.$$

Preferably, a carboxyl group content in the poly(terephthalate-co-sebacate) resin is 50 moles per ton or less, preferably 30 moles per ton or less, and most preferably 25 moles per ton or less. When the carboxyl group content increases, a water resistance of the poly(terephthalate-co-sebacate) resin becomes worse during preserving or processing, making a product quality have a tendency to become worse. When the carboxyl group content is too low, a process route becomes complicated, an equipment input is too high, and it is economically unfavorable.

Preferably, based on a total mass of the whole poly(terephthalate-co-sebacate) resin, a water content in the poly(terephthalate-co-sebacate) resin is 1-1000 ppm. With respect to poly(terephthalate-co-sebacate), by mass, there is no particular limitation on the lower limit of the water content, but it is usually 1 ppm or more, preferably 10 ppm-900 ppm, and most preferably 50 ppm-800 ppm. When the water content is too little, the process route becomes complicated, a drying time is also too long, it is economically unfavorable, and it may have a negative impact on color and other varieties. On the other hand, when the water content is too high, the poly(terephthalate-co-sebacate) resin will be hydrolyzed during preservation, which makes the product quality have a tendency to become worse.

When the poly(terephthalate-co-sebacate) resin according to the present invention is made into a thin film with a thickness of 25±1 μm, a water vapor transmission thereof is 100-1500 g/m$^2$/d, preferably 150-1200 g/m$^2$/d, more preferably 180-1000 g/m$^2$/d, and most preferably 200-900 g/m$^2$/d.

The present invention also provides a preparation method of the above-described poly(terephthalate-co-sebacate) resin, which comprises following steps:

(1) under an atmosphere of high purity nitrogen, putting metric sebacic acid and 1,4-butanediol into a reactor, increasing a temperature to 160-180°C for reacting for 20-40 minutes;

(2) putting terephthalic acid into the reactor, adding tetra-(2-ethylhexyl)titanate, increasing the temperature to 200-220°C for reacting for 1-2 hours, wherein an addition amount of terephthalic acid accounts for 40-60 wt% of a total amount of terephthalic acid, and an addition amount of tetra-(2-ethylhexyl)titanate accounts for 20-30 wt% of a total amount of tetra-(2-ethylhexyl)titanate;

(3) putting the rest of terephthalic acid into the reactor, adding tetra-(2-ethylhexyl)titanate that accounts for 20-30 wt% of the total amount of tetra-(2-ethylhexyl)titanate, increasing the temperature to 220-230°C for reacting for 2-3 hours;

(4) then adding the rest of tetra-(2-ethylhexyl)titanate, vacuumizing the reactor to have an internal pressure of 100 Pa or less in 2 hours, reacting at 230-260°C for 2-4 hours, stopping stirring, filling the reactor with high purity nitrogen, and extruding a resin from the reactor and pelletizing the resin to obtain the poly(terephthalate-co-sebacate) resin.

Compared with the prior art, the present invention has following beneficial effects:
the present invention has discovered by research that, the structure of the poly(terephthalate-co-sebacate) resin of the present invention satisfies a relation: $S_{\delta \text{ hydrogen on conjugated carbon chain}}/S_{\delta \text{ hydrogen on saturated carbon chain 1.2-2.4}} = 0.1$ to $0.35$. Since a sequence length and a sequence randomness of a repeat unit in the macromolecular chain are effectively controlled, when the poly(terephthalate-co-sebacate) resin is made into a thin film with a thickness of $25 \pm 1\ \mu$m, a water vapor transmission thereof is 100-1500 g/m$^2$/d, making the prepared poly(terephthalate-co-sebacate) resin show a relatively good moisture-penetrability.

**DETAILED DESCRIPTION OF THE PREFERRED EMBODIMENT**

The present invention is further described below by specific embodiments. The following examples are preferred examples of the present invention, but the embodiments of the present invention are not limited by the following examples.
Synthesis of a poly(terephthalate-co-sebacate) resin:
under an atmosphere of high purity nitrogen, metric sebacic acid and 1,4-butanediol were put into a reactor, a temperature was increased to 160-180°C for reacting for 20-40 minutes; terephthalic acid was put into the reactor, tetra-(2-ethylhexyl)titanate was added, the temperature was increased to 200-220°C for reacting for 1-2 hours, wherein an addition amount of terephthalic acid accounted for 60 wt% of a total amount of terephthalic acid, and an addition amount of tetra-(2-ethylhexyl)titanate accounted for 30 wt% of a total amount of tetra-(2-ethylhexyl)titanate; the rest 40 wt% of terephthalic acid was put into the reactor, tetra-(2-ethylhexyl)titanate that accounted for 30 wt% of the total amount of tetra-(2-ethylhexyl)titanate was added, the temperature was increased to 220-230°C for reacting for 2-3 hours; then the rest of tetra-(2-ethylhexyl)titanate was added, the reactor was vacuumized to have an internal pressure of 100 Pa or less in 2 hours, a reaction was carried out at 230-260°C for 2-4 hours, stirring was stopped, the reactor was filled with high purity nitrogen, and a resin was extruded from the reactor and was pelletized to obtain the poly(terephthalate-co-sebacate) resin. Changing feeding amounts of sebacic acid and terephthalic acid may achieve resins with different structures.

Example 1: Parts of sebacic acid were 26.52, parts of 1,4-butanediol were 42.71, parts of terephthalic acid were 30.71, and parts of tetra-(2-ethylhexyl)titanate were 0.06.
Example 2: Parts of sebacic acid were 30.27, parts of 1,4-butanediol were 42.41, parts of terephthalic acid were 27.26, and parts of tetra-(2-ethylhexyl)titanate were 0.06.
Example 3: Parts of sebacic acid were 21.86, parts of 1,4-butanediol were 43.08, parts of terephthalic acid were 35.00, and parts of tetra-(2-ethylhexyl)titanate were 0.06.
Example 4: Parts of sebacic acid were 30.85, parts of 1,4-butanediol were 42.6, parts of terephthalic acid were 26.49, and parts of tetra-(2-ethylhexyl)titanate were 0.06.
Example 5: Parts of sebacic acid were 20.55, parts of 1,4-butanediol were 43.19, parts of terephthalic acid were 36.2, and parts of tetra-(2-ethylhexyl)titanate were 0.06.
Example 6: Parts of sebacic acid were 33.55, parts of 1,4-butanediol were 42.15, parts of terephthalic acid were 24.24, and parts of tetra-(2-ethylhexyl)titanate were 0.06.
Example 7: Parts of sebacic acid were 17.54, parts of 1,4-butanediol were 43.43, parts of terephthalic acid were 38.97, and parts of tetra-(2-ethylhexyl)titanate were 0.06.
Example 8: Parts of sebacic acid were 39.88, parts of 1,4-butanediol were 41.64, parts of terephthalic acid were 18.42, and parts of tetra-(2-ethylhexyl)titanate were 0.06.

Comparative Example 1:

under an atmosphere of high purity nitrogen, metric sebacic acid and 1,4-butanediol were put into a reactor, a temperature was increased to 160-180°C for reacting for 20-40 minutes; terephthalic acid was put into the reactor, tetra-(2-ethylhexyl)titanate was added, the temperature was increased to 200-220°C for reacting for 1-2 hours, then the temperature was increased to 220-230°C for reacting for 2-3 hours; then the reactor was vacuumized to have an internal pressure of 100 Pa or less in 2 hours, a reaction was carried out at 230-260°C for 2-4 hours, stirring was stopped, the reactor was filled with high purity nitrogen, and a resin was extruded from the reactor and was pelletized to obtain a poly(terephthalate-co-sebacate) resin.
Wherein,
parts of sebacic acid were 17.54, parts of 1,4-butanediol were 43.43, parts of terephthalic acid were 38.97, and parts of tetra-(2-ethylhexyl)titanate were 0.06.

Comparative Example 2:

Wherein, parts of sebacic acid were 39.88, parts of 1,4-butanediol were 41.64, parts of terephthalic acid were 18.42, and parts of tetra-(2-ethylhexyl)titanate were 0.06. The preparation technology was the same as Comparative Example 1.

Testing method of $^1$H spectra:

$S_{\delta\ hydrogen\ on\ conjugated\ carbon\ chain}$ is a total area of a peak integration of hydrogen on a conjugated carbon chain in a $^1$H NMR spectra, and $S_{\delta\ hydrogen\ on\ saturated\ carbon\ chain\ 1.2-2.4}$ is a total area of a peak integration of hydrogen on a saturated carbon chain and with a chemical shift between 1.2-2.4 ppm in the $^1$H NMR spectra. In a nuclear magnetic testing, after dissolving a sample with chloroform-d, a test was carried out at room temperature of 25°C using a German Bruker DRX-400 nuclear magnetic resonance spectrometer.

Testing method of water vapor transmission: the poly(terephthalate-co-sebacate) resin was made into a thin film of $25\pm1$ μm, and a water vapor transmission of a film material was tested using Test Dish Water Method under an environment at 40°C and with a relative humidity of 60% by ASTM E96 standard. Results of performance tests are shown as Table 1.

Testing method of carboxyl group content: a test was carried out according to regulations of a method A in GB/T14190-2008.

Testing method of water content: a test was carried out according to regulations of a method B in GB/T 12006.2-2009.

Table 1. Results of performance tests of poly(terephthalate-co-sebacate) resins of Examples 1-8 and Comparative Examples 1-2

|  | carboxyl group content: mol/T | water content: ppm | $S_{\delta\ hydrogen\ on\ conjugated\ carbon\ chain}/S_{\delta\ hydrogen\ on\ saturated\ carbon\ chain\ 1.2-2.4}$ | water vapor transmission unit: g/m$^2$/d |
|---|---|---|---|---|
| Example 1 | 18.3 | 230 | 0.22 | 250 |
| Example 2 | 19.6 | 360 | 0.18 | 850 |
| Example 3 | 23.4 | 780 | 0.28 | 190 |
| Example 4 | 24.9 | 420 | 0.17 | 1000 |
| Example 5 | 26.4 | 870 | 0.3 | 170 |
| Example 6 | 27.5 | 890 | 0.15 | 1150 |
| Example 7 | 42.6 | 960 | 0.35 | 120 |
| Example 8 | 48.3 | 920 | 0.1 | 1450 |
| Comparative Example 1 | 42.6 | 960 | 0.37 | 80 |
| Comparative Example 2 | 18.3 | 920 | 0.08 | 1750 |

It may be seen from Examples 1-8 and Comparative Examples 1-2 in Table 1 that, a structure of the poly(terephthalate-co-sebacate) resin satisfies a relation: $S_{\delta\ hydrogen\ on\ conjugated\ carbon\ chain}/S_{\delta\ hydrogen\ on\ saturated\ carbon\ chain\ 1.2-2.4}$ = 0.1 to 0.35. When the poly(terephthalate-co-sebacate) resin is made into a thin film with a thickness of $25\pm1$ μm, a water vapor transmission thereof is 100-1500 g/m$^2$/d. When a value of $S_{\delta\ hydrogen\ on\ conjugated\ carbon\ chain}/S_{\delta\ hydrogen\ on\ saturated\ carbon\ chain\ 1.2-2.4}$ is greater than 0.35 or less than 0.1, while the poly(terephthalate-co-sebacate) resin is made into a thin film with a thickness of $25\pm1$ μm, its water vapor transmission is too low or too high, showing a relatively poor moisture-penetrability.

**Claims**

1. A poly(terephthalate-co-sebacate) resin, **characterized in that**, a structure of the poly(terephthalate-co-sebacate) resin satisfies a relation as follows:

$$S_{\delta \text{ hydrogen on conjugated carbon chain}} / S_{\delta \text{ hydrogen on saturated carbon chain } 1.2\text{-}2.4} = 0.1 \text{ to } 0.35;$$

wherein said $S_{\delta \text{ hydrogen on conjugated carbon chain}}$ is a total area of a peak integration of hydrogen on a conjugated carbon chain in a $^1$H NMR spectra, and said $S_{\delta \text{ hydrogen on saturated carbon chain } 1.2\text{-}2.4}$ is a total area of a peak integration of hydrogen on a saturated carbon chain and with a chemical shift between 1.2-2.4 ppm in the $^1$H NMR spectra, wherein a testing method of the $^1$H NMR spectra is: after dissolving a sample with chloroform-d, carrying out a test at room temperature of 25°C using a German Bruker DRX-400 nuclear magnetic resonance spectrometer.

2. The poly(terephthalate-co-sebacate) resin according to claim 1, wherein the structure of the poly(terephthalate-co-sebacate) resin satisfies a relation:

$$S_{\delta \text{ hydrogen on conjugated carbon chain}} / S_{\delta \text{ hydrogen on saturated carbon chain } 1.2\text{-}2.4} = 0.15 \text{ to } 0.3,$$

preferably, the structure of the poly(terephthalate-co-sebacate) resin satisfies a relation:

$$S_{\delta \text{ hydrogen on conjugated carbon chain}} / S_{\delta \text{ hydrogen on saturated carbon chain } 1.2\text{-}2.4} = 0.17 \text{ to } 0.28,$$

and more preferably, the structure of the poly(terephthalate-co-sebacate) resin satisfies a relation:

$$S_{\delta \text{ hydrogen on conjugated carbon chain}} / S_{\delta \text{ hydrogen on saturated carbon chain } 1.2\text{-}2.4} = 0.18 \text{ to } 0.22.$$

3. The poly(terephthalate-co-sebacate) resin according to claim 1, wherein a carboxyl group content in the poly(terephthalate-co-sebacate) is 50 moles per ton or less, preferably 30 moles per ton or less, and more preferably 25 moles per ton or less, and a testing method of the carboxyl group content is carried out according to regulations of a method A in GB/T14190-2008.

4. The poly(terephthalate-co-sebacate) resin according to claim 1, wherein based on a total mass of the poly(terephthalate-co-sebacate) resin, a water content in the poly(terephthalate-co-sebacate) is 1-1000 ppm, preferably 10 ppm-900 ppm, and more preferably 50 ppm-800 ppm, and a testing method of the water content is carried out according to regulations of a method B in GB/T 12006.2-2009.

5. The poly(terephthalate-co-sebacate) resin according to any of claims 1 to 4, wherein when the poly(terephthalate-co-sebacate) is made into a thin film with a thickness of 25±1 μm, a water vapor transmission thereof is 100-1500 g/m$^2$/d, preferably 150-1200 g/m$^2$/d, more preferably 180-1000 g/m$^2$/d, and the most preferably 200-900 g/m$^2$/d, tested using a method as described in the detailed description.

6. A preparation method of the poly(terephthalate-co-sebacate) resin according to any of claims 1 to 4, **characterized in that**, the preparation method comprises following steps:

(1) under an atmosphere of high purity nitrogen, putting metric sebacic acid and 1,4-butanediol into a reactor, increasing a temperature to 160-180°C for reacting for 20-40 minutes;
(2) putting terephthalic acid into the reactor, adding tetra-(2-ethylhexyl)titanate, increasing the temperature to 200-220°C for reacting for 1-2 hours, wherein an addition amount of terephthalic acid accounts for 40-60 wt% of a total amount of terephthalic acid, and an addition amount of tetra-(2-ethylhexyl)titanate accounts for 20-30 wt% of a total amount of tetra-(2-ethylhexyl)titanate;
(3) putting the rest of terephthalic acid into the reactor, adding tetra-(2-ethylhexyl)titanate that accounts for 20-30 wt% of the total amount of tetra-(2-ethylhexyl)titanate, increasing the temperature to 220-230°C for reacting for 2-3 hours;
(4) then adding the rest of tetra-(2-ethylhexyl)titanate, vacuumizing the reactor to have an internal pressure of 100 Pa or less in 2 hours, reacting at 230-260°C for 2-4 hours, stopping stirring, filling the reactor with high purity nitrogen, and extruding a resin from the reactor and pelletizing the resin to obtain the poly(terephthalate-co-sebacate) resin.

**Patentansprüche**

1. Poly(Terephthalat-Co-Sebacat)harz, **dadurch gekennzeichnet, dass** eine Struktur des Poly(Terephthalat-Co-Sebacat)harzes eine Beziehung wie folgt erfüllt:

$$S_\delta \text{ Wasserstoff auf konjugierter Kohlenstoffkette} / S_\delta \text{ Wasserstoff auf gesättigter Kohlenstoffkette } 1,2\text{-}2,4 = 0,1 \text{ bis } 0,35;$$

worin $S_\delta$ Wasserstoff auf konjugierter Kohlenstoffkette eine gesamte Fläche einer Spitzenintegration von Wasserstoff auf einer konjugierten Kohlenstoffkette in einem $^1$H NMR Spektrum ist, und $S_\delta$ Wasserstoff auf gesättigter Kohlenstoffkette 1,2-2,4 eine gesamte Fläche einer Spitzenintegration von Wasserstoff auf einer gesättigten Kohlenstoffkette und mit einer chemischen Verschiebung zwischen 1,2-2,4 ppm im $^1$H NMR Spektrum ist,
worin ein Prüfverfahren des $^1$H NMR Spektrums ist: nach dem Auflösen einer Probe mit Chloroform-d, Durchführen eines Versuchs bei Raumtemperatur von 25°C unter Verwendung eines German Bruker DRX-400 Nuklearmagnetresonanzspektrometers.

2. Poly(Terephthalat-Co-Sebacat)harz nach Anspruch 1, worin die Struktur des Poly(Terephthalat-Co-Sebacat)harzes eine Beziehung erfüllt:

$$S_\delta \text{ Wasserstoff auf konjugierter Kohlenstoffkette} / S_\delta \text{ Wasserstoff auf gesättigter Kohlenstoffkette } 1,2\text{-}2,4 = 0,15 \text{ bis } 0,3,$$

bevorzugt die Struktur des Poly(Terephthalat-Co-Sebacat)harzes eine Beziehung erfüllt:

$$S_\delta \text{ Wasserstoff auf konjugierter Kohlenstoffkette} / S_\delta \text{ Wasserstoff auf gesättigter Kohlenstoffkette } 1,2\text{-}2,4 = 0,17 \text{ bis } 0,28,$$

und noch bevorzugter die Struktur des Poly(Terephthalat-Co-Sebacat)harzes eine Beziehung erfüllt:

$$S_\delta \text{ Wasserstoff auf konjugierter Kohlenstoffkette} / S_\delta \text{ Wasserstoff auf gesättigter Kohlenstoffkette } 1,2\text{-}2,4 = 0,18 \text{ bis } 0,22.$$

3. Poly(Terephthalat-Co-Sebacat)harz nach Anspruch 1, worin ein CarboxylgruppenGehalt im Poly(Terephthalat-Co-Sebacat) 50 Mol je Tonne oder weniger, bevorzugt 30 Mol je Tonne oder weniger, und noch bevorzugter 25 Mol je Tonne oder weniger beträgt, und ein Prüfverfahren des Carboxylgruppen-Gehalts gemäß Vorschriften eines Verfahrens A in GB/T14190-2008 durchgeführt wird.

4. Poly(Terephthalat-Co-Sebacat)harz nach Anspruch 1, worin aufgrund einer gesamten Masse des Poly(Terephthalat-Co-Sebacat)harzes ein Wassergehalt im Poly(Terephthalat-Co-Sebacat) 1-1000 ppm, bevorzugt 10 ppm-900 ppm, und noch bevorzugter 50 ppm-800 ppm beträgt, und ein Prüfverfahren des Wassergehalts gemäß Vorschriften eines Verfahrens B in GB/T12006.2-2009 durchgeführt wird.

5. Poly(Terephthalat-Co-Sebacat)harz nach einem der Ansprüche 1 bis 4, worin, wenn das Poly(Terephthalat-Co-Sebacat) in einem Dünnfilm mit einer Dicke von 25±1 μm ausgebildet ist, eine Wasserdampfübertragung davon 100-1500 g/m$^2$/d, bevorzugt 150-1200 g/m$^2$/d, noch bevorzugter 180-1000 g/m$^2$/d, und am bevorzugsten 200-900 g/m$^2$/d beträgt, geprüft unter Verwendung eines Verfahrens wie in der detaillierten Beschreibung beschrieben.

6. Herstellungsverfahren des Poly(Terephthalat-Co-Sebacat)harzes nach einem der Ansprüche 1 bis 4, **dadurch gekennzeichnet, dass** das Herstellungsverfahren die folgenden Schritte umfasst:

(1) unter einer Atmosphäre von hochreinem Stickstoff, Einbringen von metrischer Sebacinsäure und 1,4-Butandiol in einen Reaktor, Steigern einer Temperatur auf 160-180°C zum Reagieren für 20-40 Minuten;
(2) Einbringen von Terephthalsäure in den Reaktor, Hinzugeben von Tetra-(2-Ethylhexyl)Titanat, Steigern der Temperatur auf 200-220°C zum Reagieren für 1-2 Stunden, worin eine Zugabemenge von Terephthalsäure sich auf 40-60 Gew.-% einer Gesamtmenge an Terephthalsäure beläuft, und eine Zugabemenge von Tetra-(2-Ethylhexyl)Titanat sich auf 20-30 Gew.-% einer Gesamtmenge an Tetra-(2-Ethylhexyl)Titanat beläuft;

(3) Einbringen des Restes der Terephthalsäure in den Reaktor, Hinzugeben von Tetra-(2-Ethylhexyl)Titanat, das sich auf 20-30 Gew.-% der Gesamtmenge an Tetra-(2-Ethylhexyl)Titanat beläuft, Steigern der Temperatur auf 220-230°C zum Reagieren für 2-3 Stunden;

(4) dann, Hinzugeben des Restes des Tetra-(2-Ethylhexyl)Titanats, Unter-Vakuum-Setzen des Reaktors, damit er einen Innendruck von 100 Pa oder weniger in 2 Stunden hat, Reagieren bei 230-260°C für 2-4 Stunden, Beenden des Rührens, Füllen des Reaktors mit hochreinem Stickstoff, und Extrudieren eines Harzes aus dem Reaktor und Pelletieren des Harzes, um das Poly(Terephthalat-Co-Sebacat)harz zu gewinnen.

## Revendications

1. Résine de poly(téréphtalate-co-sébacate), **caractérisée en ce qu'**une structure de la résine de poly(téréphtalate-co-sébacate) satisfait une relation suivante :

$$S_{\delta \text{ hydrogène sur chaîne carbonée conjuguée}} / S_{\delta \text{ hydrogène sur chaîne carbonée conjuguée 1,2-2,4}} = 0,1 \text{ à } 0,35 ;$$

dans laquelle ledit $S_{\delta \text{ hydrogène sur chaîne carbonée conjuguée}}$ est une aire totale d'un pic d'intégration d'hydrogène sur une chaîne carbonée conjuguée dans un spectre RMN $^1$H, et ledit $S_{\delta \text{ hydrogène sur chaîne carbonée conjuguée 1,2-2,4}}$ est une aire totale d'un pic d'intégration d'hydrogène sur une chaîne carbonée saturée et avec un déplacement chimique entre 1,2 et 2,4 ppm dans les spectres RMN $^1$H,

dans laquelle un procédé de test de spectre RMN $^1$H est : après dissolution d'un échantillon avec du chloroforme-d, une réalisation d'un test à une température ambiante de 25°C en utilisant un spectromètre à résonance magnétique nucléaire allemand Bruker DRX-400.

2. Résine de poly(téréphtalate-co-sébacate) selon la revendication 1, dans laquelle la structure de la résine de poly(téréphtalate-co-sébacate) satisfait une relation :

$$S_{\delta \text{ hydrogène sur chaîne carbonée conjuguée}} / S_{\delta \text{ hydrogène sur chaîne carbonée conjuguée 1,2-2,4}} = 0,15 \text{ à } 0,3,$$

de préférence, la structure de la résine de poly(téréphtalate-co-sébacate) satisfait une relation :

$$S_{\delta \text{ hydrogène sur chaîne carbonée conjuguée}} / S_{\delta \text{ hydrogène sur chaîne carbonée conjuguée 1,2-2,4}} = 0,17 \text{ à } 0,28,$$

et de manière plus préférée, la structure de la résine de poly(téréphtalate-co-sébacate) satisfait une relation :

$$S_{\delta \text{ hydrogène sur chaîne carbonée conjuguée}} / S_{\delta \text{ hydrogène sur chaîne carbonée conjuguée 1,2-2,4}} = 0,18 \text{ à } 0,22.$$

3. Résine de poly(téréphtalate-co-sébacate) selon la revendication 1, dans laquelle une teneur en groupe carboxyle dans le poly(téréphtalate-co-sébacate) est de 50 moles par tonne ou moins, de préférence de 30 moles par tonne ou moins, et de manière plus préférée de 25 moles par tonne ou moins, et un procédé de test de la teneur en groupe carboxyle est réalisé selon des règles d'un procédé A dans GB/T14190-2008.

4. Résine de poly(téréphtalate-co-sébacate) selon la revendication 1, dans laquelle, sur la base d'une masse totale de la résine de poly(téréphtalate-co-sébacate), une teneur en eau dans le poly(téréphtalate-co-sébacate) est de 1 à 1 000 ppm, de préférence de 10 ppm à 900 ppm, et de manière plus préférée de 50 ppm à 800 ppm, et un procédé de test de la teneur en eau est effectué selon les règles d'un procédé B dans GB/T 12006.2-2009.

5. Résine de poly(téréphtalate-co-sébacate) selon l'une quelconque des revendications 1 à 4, dans laquelle lorsque le poly(téréphtalate-co-sébacate) est transformé en un film mince d'une épaisseur de 25±1 $\mu$m, une transmission de vapeur d'eau de celui-ci est de 100 à 1 500 g/m²/d, de préférence de 150 à 1 200 g/m²/d, de manière plus préférée de 180 à 1 000 g/m²/d, et de la manière la plus préférée de 200 à 900 g/m²/d, testé en utilisant un procédé décrit dans la description détaillée.

6.  Procédé de préparation de la résine de poly(téréphtalate-co-sébacate) selon l'une quelconque des revendications 1 à 4, **caractérisé en ce que** le procédé de préparation comprend les étapes suivantes :

(1) sous une atmosphère d'azote de haute pureté, mettre de l'acide sébacique métrique et du 1,4-butanediol dans un réacteur, augmenter la température jusqu'à 160 à 180°C pour réaction pendant 20 à 40 minutes ;
(2) mettre de l'acide téréphtalique dans le réacteur, ajouter du tétra-(2-éthylhexyl)titanate, augmenter la température jusqu'à 200 à 220°C pour réagir pendant 1 à 2 heures, dans lequel une quantité d'addition d'acide téréphtalique représente 40 à 60 % en poids d'une quantité totale d'acide téréphtalique, et une quantité d'addition de tétra-(2-éthylhexyl)titanate représente 20 à 30 % en poids d'une quantité totale de tétra-(2-éthylhexyl)titanate ;
(3) mettre le reste de l'acide téréphtalique dans le réacteur, ajouter du tétra- (2-éthylhexyl)titanate qui représente 20 à 30 % en poids de la quantité totale de tétra-(2-éthylhexyl)titanate, augmenter la température jusqu'à 220 à 230°C pour réaction pendant 2 à 3 heures ;
(4) puis ajouter les reste de tétra-(2-éthylhexyl)titanate, mettre sous vide le réacteur pour avoir une pression interne de 100 Pa ou moins en 2 heures, faire réagir entre 230 et 260°C pendant 2 à 4 heures, arrêter l'agitation, remplir le réacteur d'azote de haute pureté, et extruder une résine à partir du réacteur et pastiller la résine pour obtenir la résine de poly(téréphtalate-co-sébacate).

**EP 3 511 358 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2881415 A